# EUROPEAN PATENT APPLICATION

(11) **EP 4 744 872 A1**
(43) Date of publication of application: **20.05.2026**
(21) Application number: 25205395.4
(22) Date of filing: 29.09.2025
(51) Int. Cl.: B29C 73/16

(54) **PUNCTURE REPAIR KIT**

(30) Priority: 18.11.2024 JP 2024201105
(71) Applicant: SUMITOMO RUBBER INDUSTRIES, LTD., Kobe-shi, Hyogo 651-0072 (JP)
(72) Inventor: MAKI, TAKASHI, Hyogo, 651-0072 (JP); NOMURA, KEISUKE, Hyogo, 651-0072 (JP)
(74) Representative: Forresters IP LLP

(57) **Abstract**

A puncture repair kit (1) includes a container (2) containing a puncture repair fluid (R), compressed air source (3) for supplying compressed air (A), an extraction portion (4) disposed between the compressed air source (3) and the container (2) for extracting the puncture repair fluid (R) from the container (2). The extraction portion (4) includes an outer member (5) attached to the container (2), and an inner member (6) assembled inside the outer member (5). The inner member (6) is configured to be selectively assembled with the outer member (5) in either a first state where the entire amount of the compressed air is supplied to the inside of the container (2), or a second state where a portion of the compressed air is supplied to the inside of the container (2) and a portion of the compressed air is supplied to an outside of the container (2).

## Description

### TECHNICAL FIELD

The present invention relates to a puncture repair kit for repairing a puncture in an object.

### BACKGROUND ART

Conventionally, puncture repair kits for repairing an object such as a punctured tire are known. For example, Patent Document 1 listed below proposes a bottle unit for repairing punctures in which compressed air from a compressor is introduced into a bottle container, and a puncture repair fluid and the compressed air are sequentially taken out of the bottle container by the introduced compressed air. In addition, the Patent Document 2 listed below proposes a puncture repair kit that branches the compressed air from the compressor, thereby preventing a puncture repair fluid from solidifying in a supply path and shortening the supply time of the compressed air.

### RELATED ART DOCUMENTS

### PATENT DOCUMENTS

[Patent Document 1]
   Japanese Unexamined Patent Application Publication No. 2018-192667
[Patent Document 2]
   Japanese Unexamined Patent Application Publication No. 2023-066212

### SUMMARY OF THE INVENTION

### [Problems to be solved by the invention]

However, as in Patent Documents 1 and 2, when the entire amount of the compressed air is supplied to the inside of the container, and when the compressed air is branched and supplied to the inside and outside of the container, different puncture repair kits are needed to be prepared, therefore, there has been room for improvement in terms of cost performance.

The present invention was made in view of the above, and a primary object thereof is to provide a puncture repair kit that can be changed in a simple configuration between a state in which the entire amount of the compressed air is supplied to the inside of the container and a state in which the compressed air is split and supplied to the inside and outside of the container.

### [Means for Solving the Problems]

The present invention is a puncture repair kit for repairing a puncture in an object, including:
a container containing a puncture repair fluid;
a compressed air source for supplying compressed air;
an extraction portion disposed between the compressed air source and the container for extracting the puncture repair fluid, wherein
the extraction portion includes an outer member configured to be attached to the container, and an inner member assembled inside the outer member,
characterised in that the inner member is configured to be selectively assembled with the outer member in either a first state or a second state,
the first state is a state in which the entire amount of the compressed air is supplied to the inside of the container, and
the second state is a state in which at least a portion of the compressed air is supplied to the inside of the container and at least a portion of the compressed air is supplied to an outside of the container.

### [Effects of the Invention]

The puncture repair kit of the present invention can change the state of supplying the entire amount of the compressed air to the inside of the container and the state of supplying the compressed air by splitting the compressed air between the inside and outside of the container with a simple configuration having the above-described configuration.

### [Brief Description of the Drawings]

FIG. 1 is a cross-sectional view schematically showing a puncture repair kit according to an embodiment of the present invention.
FIG. 2 is a cross-sectional view schematically showing the puncture repair kit in a second state.
FIG. 3 is a perspective view of a first inner member.
FIG. 4 is a plan view of the first inner member.
FIG. 5 is a perspective view of a second inner member.
FIG. 6 is a plan view of the second inner member.

### [Description of Embodiments]

An embodiment of the present invention will now be described in conjunction with accompanying drawings.

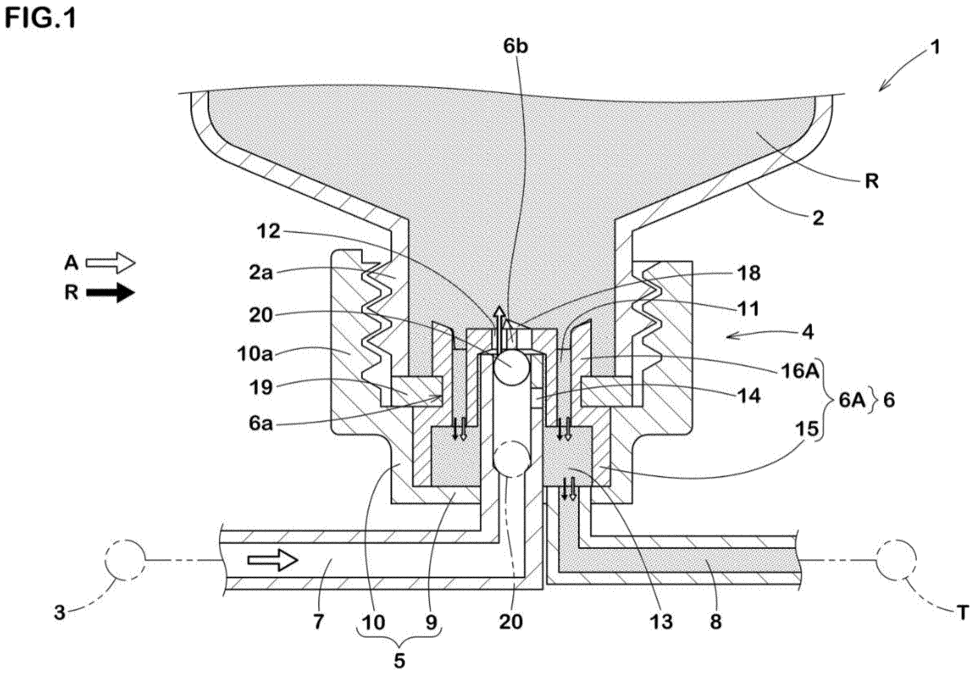

FIG. 1 is a cross-sectional view that shows a schematic diagram of a puncture repair kit 1 according to the present embodiment. As shown in FIG. 1, the puncture repair kit 1 is suitably used for repairing a puncture in an object (T), such as a punctured tire, by injecting a puncture repair fluid (R) and compressed air (A) into the object (T), for example. It should be noted that flows of the puncture repair fluid (R) during puncture repair are indicated by solid black arrows, and flows of the compressed air (A) are indicated by hollow arrows in order to facilitate understanding in the present specification.

The puncture repair kit 1 of the present embodiment includes a container 2 containing a puncture repair fluid (R) and a compressed air source 3 for supplying the compressed air (A). It is preferred that the container 2 contains the puncture repair fluid (R) inside the container 2 through a mouth portion (2a). The mouth portion (2a) of the present embodiment has a film (not shown) for keeping the contained puncture repair fluid (R) airtight. The container 2 configured as such is suitable for long-term storage of the puncture repair fluid (R).

The compressed air source 3 is a compressor, for example. The compressed air source 3 generates the compressed air (A) by receiving electricity via a cord (not shown) connected to an external power source, for example. The compressed air source 3 configured as such can supply a large amount of the compressed air (A) in a small size and is easy to store when not in use. It should be noted that the compressed air source 3 is not limited to such a form, and may be a pressure vessel that contains the compressed air (A), for example.

The puncture repair kit 1 of the present embodiment includes an extraction portion 4 that is configured to be disposed between the container 2 and the compressed air source 3. The extraction portion 4 is a connector that receives the compressed air (A) from the compressed air source 3 and extracts the puncture repair fluid (R) from the container 2, for example. The extraction portion 4 in the present embodiment includes an outer member 5 that is configured to be attached to the mouth portion (2a) of the container 2, and an inner member 6 that is assembled inside the outer member 5.

The inner member 6 in the present embodiment can be selectively assembled with the outer member 5 in either a first state or a second state. Here, the first state is a state in which the entire amount of the compressed air (A) is supplied to the inside of the container 2. FIG. 1 shows the first state. In the first state, the puncture repair fluid (R) is ejected to the object (T) by the compressed air (A) supplied inside the container 2, for example. In the first state, the compressed air (A) is supplied to the object (T) after the puncture repair fluid (R) is discharged or at the same time as the puncture repair fluid (R) is discharged.

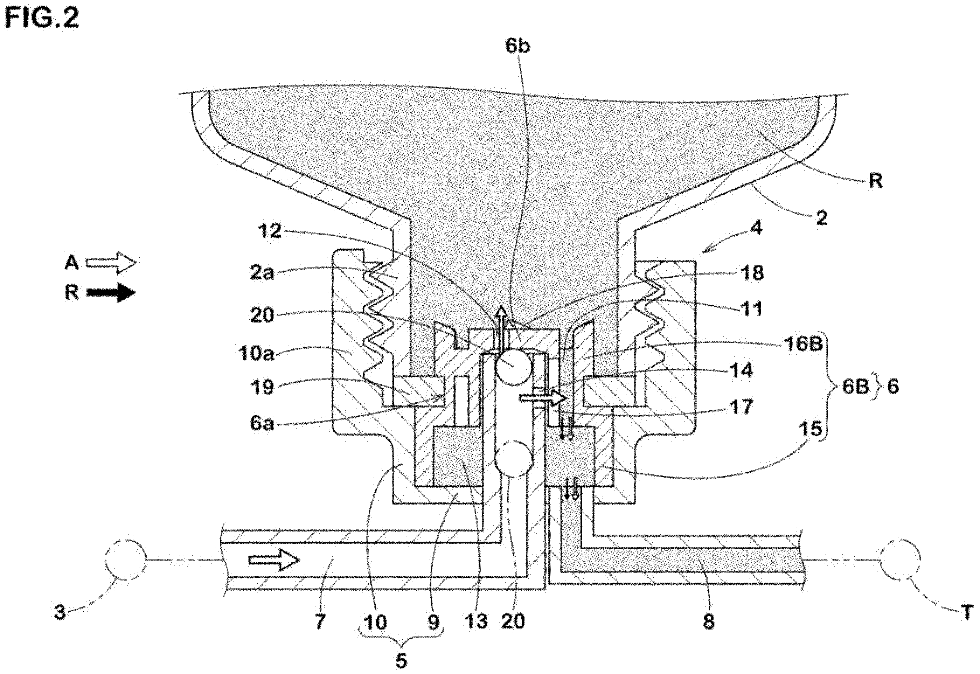

FIG. 2 is a cross-sectional view that schematically shows the puncture repair kit 1 in the second state. As shown in FIG. 2, the second state is a state in which at least a portion of the compressed air (A) is supplied to the inside of the container 2 and at least another portion of the compressed air (A) is supplied to the outside of the container 2 at the same time. In the second state, a mixture of the compressed air (A) supplied to the outside of the container 2 and the puncture repair fluid (R) is discharged toward the object (T), and at that time, the puncture repair fluid (R) is smoothly supplied by the compressed air (A) supplied inside the container 2, for example.

As shown in FIG. 1 and FIG. 2, the puncture repair kit 1 configured as such can select the first state or the second state depending on how the inner member 6 is assembled with the outer member 5. Therefore, the puncture repair kit 1 of the present embodiment can change between the first state in which the entire amount of the compressed air (A) is supplied to the inside of the container 2, and the second state in which the compressed air (A) is branched and supplied to the inside and the outside of the container 2 with a simple configuration.

In a more preferred embodiment, the outer member 5 includes a first inlet flow passage 7 to which the compressed air (A) is supplied from the compressed air source 3, and an outlet flow passage 8 for discharging the puncture repair fluid (R) and the compressed air (A) to the object (T). The outer member 5 includes a floor plate portion 9 in which the first inlet flow passage 7 and the outlet flow passage 8 are provided, and a cylindrical portion 10 extending from the floor plate portion 9, for example. It is preferred that the cylindrical portion 10 has a connecting portion (10a) for connecting to the mouth portion (2a) of the container 2. The outer member 5 configured as such can be firmly attached to the mouth portion (2a) of the container 2.

The first inlet flow passage 7, the outlet flow passage 8, the floor plate portion 9, and the cylindrical portion 10 are formed integrally in one piece in the outer member 5, for example. The outer member 5 configured as such can reduce the number of parts and is excellent in cost performance. The outer member 5 is not limited to such a form, and the first inlet flow passage 7 and the outlet flow passage 8 may be molded as separate members from the floor plate portion 9 and the cylindrical portion 10 and then joined together, for example.

It is preferred that the inner member 6 includes a second inlet flow passage 11 through which the puncture repair fluid (R) is supplied (discharged) from the container 2, and a first opening 12 through which the compressed air (A) is supplied to the inside of the container 2 from the first inlet flow passage 7. The first opening 12 in the present embodiment is arranged at the end of the first inlet flow passage, for example. The second inlet flow passage 11 extends in the vertical direction during puncture repair, for example. It is preferred that the first opening 12 is provided at the end of the first inlet flow passage 7. The inner member 6 configured as such can efficiently supply the compressed air (A) to the inside of the container 2, and can smoothly receive the puncture repair fluid (R) by the supplied compressed air (A) and gravity.

It is preferred that the inner member 6 and the outer member 5 include a mixing chamber 13 within their combination for producing a mixture of the puncture repair fluid (R) and the compressed air (A) in the second state. The mixing chamber 13 is a unified space extending around the first inlet flow passage 7, for example. With the mixing chamber 13 configured as such, the puncture repair fluid (R) can be uniformly mixed with the compressed air (A) in a large space.

In the second state of the present embodiment, the outside of the container 2 is the mixing chamber 13 or the second inlet flow passage 11. FIG. 2 shows a state in which at least a portion of the compressed air (A) is supplied to the second inlet flow passage 11. The extraction portion 4 configured as such can supply the compressed air (A) to at least one of the mixing chamber 13 and the second inlet flow passage 11 without obstructing the flow of the puncture repair fluid (R) in the second inlet flow passage 11, therefore, it is possible that the puncture repair fluid (R) and the compressed air (A) are mixed together efficiently.

The first inlet flow passage 7 in the present embodiment includes a second opening 14 for supplying at least a portion of the compressed air (A) to the outside of the container 2 in the second state. The second opening 14 in the present embodiment is formed in a sidewall of the first inlet flow passage 7, for example. The second opening 14 is closed by the inner member 6 in the first state, for example. The extraction portion 4 configured as such can be constructed by using the outer member 5 common for the first state and the second state, and is therefore excellent in the cost performance.

The inner member 6 includes a first inner member 6A for establishing the first state and a second inner member 6B for establishing the second state, for example. With the inner member 6 in this case, the first state or the second state can be selected by selecting the first inner member 6A or the second inner member 6B. The inner member 6 configured as such reliably switch between the first state and the second state, thereby, it is possible that reliability is improved.

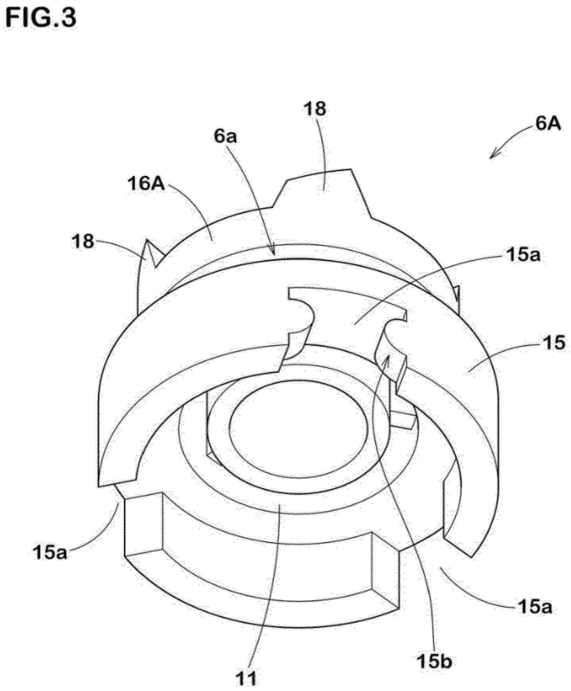

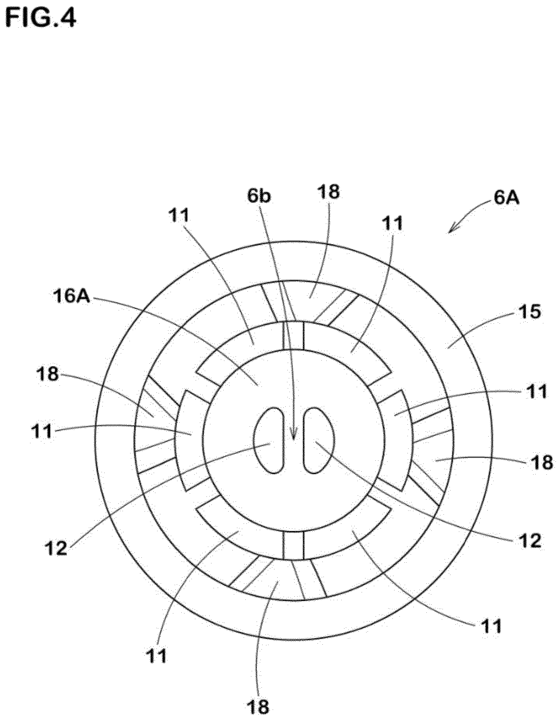

FIG. 3 is a perspective view of the first inner member 6A, and FIG. 4 is a plan view of the first inner member 6A. As shown in FIG. 1, FIG. 3, and FIG.4, the first inner member 6A of the present embodiment includes an outer cylindrical portion 15 that is fitted in the cylindrical portion 10 of the outer member 5, and a first ceiling portion 16A that is assembled with the first inlet flow passage 7. The first inner member 6A configured as such has high precision when assembled with the outer member 5, which helps to improve reliability.

The first ceiling portion 16A is provided with at least one second inlet flow passage 11 (six second inlet flow passages 11 in the present embodiment) and at least one first opening 12 (two first openings 12 in the present embodiment). It is preferred that the second inlet flow passages 11 are formed around the first openings 12 (or the first opening 12 when the first ceiling portion 16A has one second inlet flow passage 11). In the present embodiment, the second inlet flow passages 11 of the first ceiling portion 16A are formed around the entire periphery of the first openings 12 in a plan view. The first inner member 6A configured as such increases the internal pressure in the container 2 by the compressed air (A) supplied to the container 2, and this internal pressure enables the puncture repair fluid (R) to be smoothly discharged through the second inlet flow passages 11.

The first ceiling portion 16A has at least one breaking portion 18 (four breaking portions 18 in the present embodiment) for breaking a film (not shown) provided on the mouth portion (2a) of the container 2. The breaking portions 18 are provided around the second inlet flow passages 11 when the first ceiling portion 16A has a plurality of the breaking portions 18, for example. The first inner member 6A configured as such can break the film of the container 2 by simply attaching the container 2 to the extraction portion 4 to take out the puncture repair fluid (R) from the container 2.

The outer cylindrical portion 15 of the first inner member 6A is provided with one or more notches (15a) (three notches (15a) in the present embodiment) that are used for positioning when assembled with the cylindrical portion 10 of the outer member 5. It is preferred that pitches of the notches (15a), three notches (15a) in the present embodiment, are different from one another when the outer cylindrical portion 15 of the first inner member 6A has a plurality of the notches (15a). The floor plate portion 9 and/or the cylindrical portion 10 of the outer member 5 may have one or more protrusions configured to be engaged with the notch (15a) or the notches (15a) for positioning when the outer member 5 and the inner member 6 are assembled together, for example. The outer cylindrical portion 15 configured as such can prevent mis-assembly since the outer cylindrical portion 15 is assembled with the cylindrical portion 10 of the outer member 5 in only one direction, i.e., only in a predetermined orientation.

It is preferred that at least one of the notches (15a) of the first inner member 6A has a locking mechanism (15b) for maintaining the assembled state of the outer member 5 and the inner member 6. More specifically, in the present embodiment, the locking mechanism (15b) may be one or more small protrusions provided on side walls of one of the notches (15a), and the one or more protrusions of the outer member 5 may be provided with small recessed portions (not shown) corresponding to the small protrusions of the locking mechanism (15b) of the notches (15a), and the small protrusions provided on the side walls of the one of the notches (15a) may be engaged with the small recessed portions provided on the one or more protrusions of the outer member 5, which maintains the assembled state of the outer member 5 and the inner member 6. Conversely, one or more of the notches (15a) may have one or more small recessed portions and the one or more protrusions may have one or more small protrusions. The notches (15a) configured as such prevent the outer member 5 and the inner member 6 from disassembly, and thus can improve reliability during long-term storage.

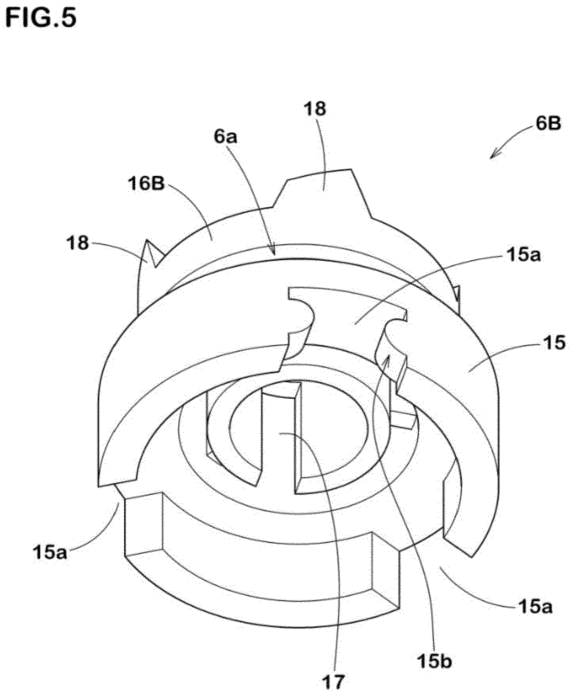

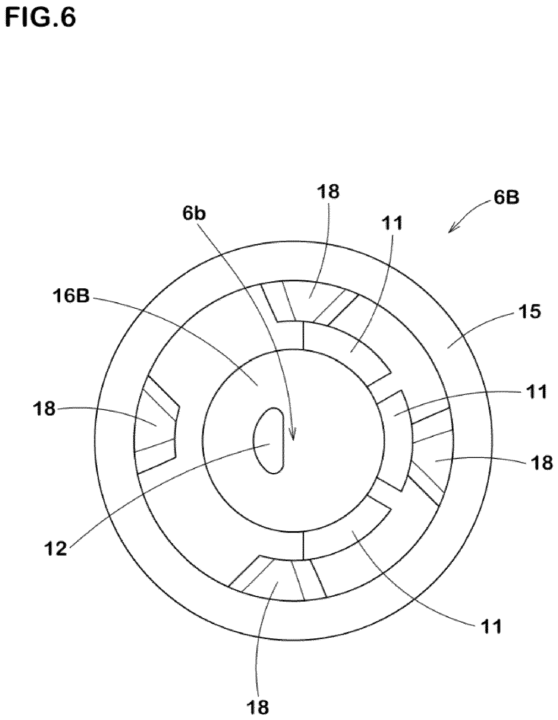

FIG. 5 is a perspective view of the second inner member 6B, and FIG. 6 is a plan view of the second inner member 6B. As shown in FIG. 2, FIG. 5, and FIG. 6, the second inner member 6B in the present embodiment includes the outer cylindrical portion 15 that is fitted in the cylindrical portion 10 of the outer member 5, and a second ceiling portion 16B that is assembled with the first inlet flow passage 7. Such second inner member 6B configured as such has high accuracy when assembled with the outer member 5, and helps to improve reliability.

The second ceiling portion 16B is provided with at least one second inlet flow passage 11 (three second inlet flow passages 11 in the present embodiment) and at least one first opening 12 (one first opening 12 in the present embodiment). It is preferred that the second inlet flow passages 11 are formed around the first opening 12 or the first openings 12, when the second ceiling portion 16B has a plurality of the second inlet flow passages 11. The second inlet flow passages 11 of the second ceiling portion 16B of the present embodiment are all arranged on one side of the perimeter of the first opening 12 in a plan view. The second inlet flow passages 11 configured as such accelerate the mixing of the puncture repair fluid (R) and the compressed air (A) in the mixing chamber 13, and thus can efficiently mix the puncture repair fluid (R) and the compressed air (A).

The second ceiling portion 16B in the present embodiment includes a third opening 17 that communicates with the second inlet flow passage 11. When the second inner member 6B is assembled with the outer member so that the third opening 17 overlaps with the second opening 14 provided in the first inlet flow passage 7 of the outer member 5, the second state is established in which at least a portion of the compressed air (A) is supplied to the outside of the container 2, in the present embodiment to the second inlet flow passage 11. The third opening is formed in a sidewall of the second inlet flow passage in the present embodiment, for example. The third opening 17 configured as such accelerates the mixing of the puncture repair fluid (R) and the compressed air (A) in the mixing chamber 13, allowing the puncture repair fluid (R) and the compressed air (A) to be mixed efficiently. It should be noted that the expression "the second opening overlaps with the third opening" means that the second opening immediately overlaps with the third opening without having another member between the second opening and the third opening so that the second opening and the third opening communicate with each other in the present specification.

The second ceiling portion 16B includes at least one breaking portion 18 (four breaking portions 18 in the present embodiment) for breaking the film (not shown) provided in the mouth portion (2a) of the container 2. The breaking portions 18 in the present embodiment are arranged around the second inlet flow passages 11 (or the second inlet flow passage 11 when the second ceiling portion 16B has one second inlet flow passage 11), for example. The second inner member 6B configured as such can break the film of the container 2 by simply attaching the container 2 to the extraction portion 4 to take out the puncture repair fluid (R) from the container 2.

The outer cylindrical portion 15 of the second inner member 6B is provided with one or more notches (15a), three notches (15a) in the present embodiment, that are used for positioning when assembled with the cylindrical portion 10 of the outer member 5. It is preferred that the pitches of the notches (15a), three notches (15a) in the present embodiment, are different from one another when the outer cylindrical portion 15 of the second inner member 6B has a plurality of the notches (15a). The outer cylindrical portion 15 configured as such is assembled with the cylindrical portion 10 of the outer member 5 in only one direction, i.e., only in a predetermined orientation, thereby, it is possible that incorrect assembly is prevented.

At least one of the notches (15a) of the second inner member 6B has the locking mechanism (15b) for maintaining the assembled state of the outer member 5 and the inner member 6, for example. The notches (15a) configured as such prevent the outer member 5 and the inner member 6 from disassembly, and thus can improve reliability during long-term storage.

As shown in FIG. 1 and FIG. 2, it is preferred that the extraction portion 4 includes a seal member 19 attached to an outer periphery of the inner member 6. It is preferred that the seal member 19 is a disk-shaped gasket, more specifically, a ring-shaped flat gasket in the present embodiment. The seal member 19 has a surface on one side configured to be in contact with the outer member 5 and the inner member 6 when assembled, and a surface on the other side configured to be in contact with the mouth portion (2a) of the container 2 when in use, for example. The seal member 19 configured as such can improve the airtightness between the extraction portion 4 and the mouth portion (2a) of the container 2 and the airtightness between the outer member 5 and the inner member 6.

The inner member 6 of the present embodiment has a seal retaining structure (6a) for preventing the seal member 19 from coming off the inner member 6. The seal retaining structure (6a) is a groove formed on the outer periphery of the inner member 6, for example. The seal retaining structure (6a) configured as such can reliably prevent the seal member 19 from coming off with a simple configuration, and can achieve both the cost performance and reliability.

It is preferred the first inlet flow passage 7 has a check valve 20 to prevent the puncture repair fluid (R) from flowing back into the compressed air source 3. FIG. 1 and FIG. 2 show the check valve 20 in a state in which the compressed air (A) is being supplied. Further, the check valve 20 when the compressed air (A) is not supplied is shown by a two-dot chain line in FIG. 1 and FIG. 2.

The first inlet flow passage 7 configured such as can prevent the puncture repair fluid (R) from flowing back into the compressed air source 3, even if the puncture repair fluid (R) remains inside the container 2 when the supply of the compressed air (A) from the compressed air source 3 is stopped, thereby, it is possible that damage to the compressed air source 3 is prevented.

The check valve 20 is a ball valve, for example. The check valve 20 configured as such can reliably suppress backflow of the puncture repair fluid (R) with a simple configuration, and thus is excellent in the cost performance.

It is preferred that the inner member 6 has a valve retaining structure (6b) for preventing the check valve 20 from being discharged from the first inlet flow passage 7. The valve retaining structure (6b) is provided adjacent to the first opening 12, for example. The valve retaining structure (7b) configured as such does not require additional processing and is cost-effective. The valve retaining structure (6b) is not limited to such a manner, and may be a protrusion that protrudes toward the inside of the first inlet flow passage 7, or a narrowed portion having a decreased inner diameter of the first inlet flow passage 7, for example.

The puncture repair kit 1 may be configured to supply only the compressed air (A) to the object (T) by attaching a cover member (not shown) instead of the container 2, for example. The puncture repair kit 1 configured as such can be suitably used to supply the compressed air (A) to the object (T) having decreased air pressure.

The above-described puncture repair kit 1 is configured to select between the first state and the second state by selecting the first inner member 6A or the second inner member 6B, but is not limited to such a manner, and for example, the first state and the second state may be selected by using the second inner member 6B as the inner member 6.

In this case, it is preferred that the inner member 6 is configured to be selectable between the first state and the second state by changing the orientation of the inner member 6 with respect to the outer member 5 in the combination. The inner member 6 can be brought into the first state by assembling the inner member 6 with the outer member 5 so that the third opening 17 does not overlap with the second opening 14 formed in the first inlet flow passage 7 of the outer member 5. Further, the inner member 6 can be brought into the second state by assembling the inner member 6 with the outer member 5 so that the third opening 17 overlaps with the second opening 14. The inner member 6 configured as such can select the first state or the second state with a single inner member 6, and thereby is excellent in the cost performance.

The combination orientation can be changed by assembling the inner member 6 with the outer member 5 at a first position or a second position, for example. In this case, it is preferred that pitches of the notches (15a) (shown in FIG. 5) are the same as each other in the case where the inner member 6 has a plurality of the notches (15a). It should be noted that the inner member 6 is located at the first position in the first state and the inner member 6 is located at the second position in the second state in the present embodiment, for example.

In this case, the inner member 6 has an indication of whether the current position is the first position or the second position, for example. The inner member 6 configured as such can be easily assembled with the outer member 5 at the first state or the second state according to the required specifications, and since checking after the combination is also easy, mis-assembly can be suppressed.

The inner member 6 may be configured to be rotatable while combined with the outer member 5 to change the orientation of the combination with the outer member 5, for example. In this case, it is preferred that the notch (15a) or each notch (15a) is formed in a substantially L-shape having a first cutout portion (not shown) extending in the vertical direction and a second cutout portion (not shown) extending in the circumferential direction. In the case where the inner member 6 has a plurality of the notches (15a) and each of the notches (15a) is formed in the substantially L-shape, the pitches of the notches (15a) may be different from one another so that the inner member 6 is assembled with the outer member 5 at the second position where the second opening 14 overlaps with the third opening 17 so as to establish the second state, and then the inner member 6 may be rotated with respect to the outer member 5 so that the second opening 14 does not overlap with the third opening 17 so as to establish the first state.

In this case, the inner member 6 has an indication of whether it is assembled in the first state or the second state, for example. With the inner member 6 configured as such, the first state and the second state can be selected after the inner member 6 is assembled with the outer member 5, and it is also easy to check the current state.

The inner member 6 may be rotated by using the breaking portions 18 or by using a lever (or a handle) (not shown), for example. The lever may pass through an elongated hole extending circumferentially in the outer member 5, for example. With the inner member 6 configured as such, selection between the first state and the second state is possible not only during assembly but also during use.

The inner member 6 may have a shutter (not shown) for opening and closing the communication between the second opening 14 and the third opening 17 to switch between the first state and the second state, for example. The shutter may be opened and closed from outside the outer member 5, for example. The first state and the second state may be selected by assembling the inner member 6 which is pre-set to the open state or the closed state with the outer member 5, for example. Further, a separate member having the shutter function may be inserted to switch between the open state and the closed state, for example. The inner member 6 configured as such can switch between the first state and the second state with a simple configuration.

While detailed description has been made of especially preferred embodiments of the present invention, the present invention can be embodied in various forms without being limited to the illustrated embodiment.

### [Statement of Invention]

The present invention includes the following aspects.

### [Present Invention 1]

A puncture repair kit for repairing a puncture in an object, including:
a container containing a puncture repair fluid;
a compressed air source for supplying compressed air;
an extraction portion disposed between the compressed air source and the container for extracting the puncture repair fluid, wherein
the extraction portion includes an outer member configured to be attached to the container, and an inner member assembled inside the outer member,
characterised in that the inner member is configured to be selectively assembled with the outer member in either a first state or a second state,
the first state is a state in which the entire amount of the compressed air is supplied to the inside of the container, and
the second state is a state in which at least a portion of the compressed air is supplied to the inside of the container and at least a portion of the compressed air is supplied to an outside of the container.

### [Present Invention 2]

The puncture repair kit according to Present Invention 1, wherein
the outer member includes a first inlet flow passage to which the compressed air is supplied from the compressed air source, and an outlet flow passage for discharging the puncture repair fluid and the compressed air to the object, and
the inner member includes a first opening for supplying the compressed air to the inside of the container from the first inlet flow passage, and a second inlet flow passage to which the puncture repair fluid is discharged from the container.

### [Present Invention 3]

The puncture repair kit according to Present Invention 1 or 2, wherein
the inner member and the outer member assembled together include a mixing chamber within an assembly of the inner member and the outer member for producing a mixture of the puncture repair fluid and the compressed air in the second state, and
the outside of the container in the second state is the mixing chamber or the second inlet flow passage.

### [Present Invention 4]

The puncture repair kit according to any one of Present Inventions 1 to 3, wherein
the inner member includes a first inner member for establishing the first state and a second inner member for establishing the second state, and
the first state or the second state is selected by selecting the first inner member or the second inner member to be assembled with the outer member.

### [Present Invention 5]

The puncture repair kit according to any one of Present Inventions 1 to 3, wherein the first state or the second state is selected by changing an orientation of the inner member with respect to the outer member in an assembly of the inner member and the outer member.

### [Present Invention 6]

The puncture repair kit according to Present Invention 5, wherein
the orientation of the inner member is changed by assembling the inner member with the outer member at a first position or a second position.

### [Present Invention 7]

The puncture repair kit according to Present Invention 5 or 6, wherein the orientation of the inner member is changed by rotating the inner member within the assembly of the inner member and the outer member.

### [Present Invention 8]

The puncture repair kit according to any one of Present Inventions 1 to 3, wherein the inner member is provided with a shutter opening and closing to switch between the first state and the second state.

### [Description of Reference Signs]

- 1: puncture repair kit
- 2: container
- 3: compressed air source
- 4: extraction portion
- 5: outer member
- 6: inner member

## Claims

1. A puncture repair kit for repairing a puncture in an object, comprising:
a container containing a puncture repair fluid;
a compressed air source for supplying compressed air;
an extraction portion disposed between the compressed air source and the container for extracting the puncture repair fluid from the container, wherein
the extraction portion includes an outer member configured to be attached to the container, and an inner member assembled inside the outer member,
**characterised in that** the inner member is configured to be selectively assembled with the outer member in either a first state or a second state,
the first state is a state in which the entire amount of the compressed air is supplied to the inside of the container, and
the second state is a state in which at least a portion of the compressed air is supplied to the inside of the container and at least a portion of the compressed air is supplied to an outside of the container.

2. The puncture repair kit according to claim 1, wherein
the outer member includes a first inlet flow passage to which the compressed air is supplied from the compressed air source, and an outlet flow passage for discharging the puncture repair fluid and the compressed air to the object, and
the inner member includes a first opening for supplying the compressed air from the first inlet flow passage to the inside of the container, and a second inlet flow passage to which the puncture repair fluid is discharged from the container.

3. The puncture repair kit according to claim 1 or 2, wherein
the inner member and the outer member assembled together include a mixing chamber within an assembly of the inner member and the outer member for producing a mixture of the puncture repair fluid and the compressed air in the second state, and
the outside of the container in the second state is the mixing chamber or the second inlet flow passage.

4. The puncture repair kit according to any one of claims 1 to 3, wherein
the inner member includes a first inner member for establishing the first state and a second inner member for establishing the second state, and
the first state or the second state is selected by selecting the first inner member or the second inner member to be assembled with the outer member.

5. The puncture repair kit according to any one of claims 1 to 3, wherein the first state or the second state is selected by changing an orientation of the inner member with respect to the outer member in an assembly of the inner member and the outer member.

6. The puncture repair kit according to claim 5, wherein
the orientation of the inner member is changed by assembling the inner member with the outer member at a first position or a second position.

7. The puncture repair kit according to claim 5 or 6, wherein the orientation of the inner member is changed by rotating the inner member within the assembly of the inner member and the outer member.

8. The puncture repair kit according to any one of claims 1 to 3, wherein the inner member is provided with a shutter opening and closing to switch between the first state and the second state.

9. The puncture repair kit according to claim 2 or 3, wherein the outer member includes a floor plate portion provided with the first inlet flow passage and the outlet flow passage, and a cylindrical portion extending from the floor plate portion, and
the first inlet flow passage, the outlet flow passage, the floor plate portion, and the cylindrical portion are formed integrally.

10. The puncture repair kit according to claim 4, wherein
the outer member includes a first inlet flow passage to which the compressed air is supplied from the compressed air source, a second opening formed in the first inlet flow passage, and an outlet flow passage for discharging the puncture repair fluid and the compressed air to the object,
each of the first inner member and the second inner member includes one or more second inlet flow passages through which the puncture repair fluid is discharged from the container, and a first opening through which the compressed air is supplied from the first inlet flow passage to the inside of the container,
the second inner member includes a third opening formed in the one or more second inlet flow passages,
the first inner member does not include the third opening,
the first inner member is assembled with the outer member so that the first inner member closes the second opening of the outer member in the first state, and
the second inner member is assembled with the outer member so that the third opening of the second inner member overlaps with the second opening of the outer member in the second state.

11. The puncture repair kit according to claim 10, wherein
the first inner member includes a plurality of the second inlet flow passages, and
the second inlet flow passages of the first inner member are formed around the entire periphery of the first opening in a plan view.

12. The puncture repair kit according to claim 10 or 11, wherein the one or more second inlet flow passages of the second inner member are arranged on one side of the perimeter of the first opening in a plan view.

13. The puncture repair kit according to claim 6, wherein
the outer member includes a first inlet flow passage to which the compressed air is supplied from the compressed air source, a second opening formed in the first inlet flow passage, and an outlet flow passage for discharging the puncture repair fluid and the compressed air to the object,
the inner member includes a second inlet flow passage to which the puncture repair fluid is discharged from the container, a first opening through which the compressed air is supplied from the first inlet flow passage to the inside of the container, and a third opening formed in the second inlet flow passage,
the inner member is assembled with the outer member at the first position in the first state in which the second opening does not overlap with the third opening, and
the inner member is assembled with the outer member at the second position in the second state in which the second opening overlaps with the third opening.

14. The puncture repair kit according to any one of claims 1 to 13, wherein
the outer member includes a floor plate portion and a cylindrical portion extending from the floor plate portion,
the inner member includes an outer cylindrical portion configured to be fitted in the cylindrical portion of the outer member,
the outer cylindrical portion of the inner member includes one or more notches, and
the floor plate portion and/or the cylindrical portion of the outer member includes one or more protrusions configured to be engaged with the one or more notches.

15. The puncture repair kit according to claim 14, wherein
at least one of the one or more notches of the inner member includes one of a small protrusion and a small recessed portion,
at least one of the one or more protrusions of the outer member includes the other one of the small protrusion and the small recessed portion, and
the one of the small protrusion and the small recessed portion of the inner member is engaged with the other one of the small protrusion and the small recessed portion of the outer member when the inner member is assembled with the outer member.
